# EUROPÄISCHE PATENTSCHRIFT

(11) **EP 3 446 379 B1**
(45) Veröffentlichungstag und Bekanntmachung des Hinweises auf die Patenterteilung: **01.03.2023**
(21) Anmeldenummer: 17715476.2
(22) Anmeldetag: 04.04.2017
(51) Int. Cl.: H01T 1/14, H01T 1/16, H01T 2/02, H01T 4/10, H01T 4/14, H01C 7/12, H02H 9/06

(54) **ANORDNUNG ZUM ÜBERLASTSCHUTZ VON ÜBERSPANNUNGSSCHUTZGERÄTEN**
ARRANGEMENT FOR OVERLOAD PROTECTION FOR OVERVOLTAGE PROTECTION EQUIPMENT
DISPOSITIF DE PROTECTION CONTRE DES SURCHARGES POUR DES APPAREILS DE PROTECTION CONTRE DES SURCHARGES

(30) Priorität: 19.04.2016 DE 102016004736; 13.09.2016 DE 102016011076
(43) Veröffentlichungstag der Anmeldung: 27.02.2019
(73) Patentinhaber: DEHN SE, 92318 Neumarkt i.d. OPf. (DE)
(72) Erfinder: BROCKE, Ralph, 98693 Ilmenau/Oberpörlitz (DE)
(74) Vertreter: Isarpatent
(86) Internationale Anmeldenummer: PCT/EP2017/058001
(87) Internationale Veröffentlichungsnummer: WO 2017/182267

(56) Entgegenhaltungen:
- EP-A1- 0 183 873
- EP-A2- 2 568 480
- DE-A1-102015 008 136
- DE-C1- 19 545 505

## Beschreibung

Die Erfindung betrifft eine Anordnung zum Überlastschutz von Überspannungsschutzgeräten, bestehend aus mindestens einem Überspannungsableiter mit oder ohne thermischer, im Überlastfall ansprechender Abtrennvorrichtung nach dem Oberbegriff des Anspruchs 1, wie aus der DE 195 45 505 C1 bekannt.

Aus der DE 10 2013 019 391 A1 ist eine Anordnung zum Überlastschutz von Überspannungsschutzgeräten vorbekannt.

Diese Anordnung umfasst mindestens ein spannungsbegrenzendes Element sowie mindestens ein spannungsschaltendes Element. Wahlweise ist eine Vorsicherung vorhanden. Das spannungsbegrenzende Element ist als Varistor und das spannungsschaltende Element als Funkenstrecke ausgebildet, wobei die vorstehenden Elemente in Reihe geschalten sind. Weiterhin ist zum Schutz vor unzulässigen Impulsströmen dem spannungsbegrenzenden Element in der Reihenschaltung eine Überwachungsfunkenstrecke, einen Bypass bildend, parallel geschalten. Zusätzlich kann eine thermische Überwachungseinrichtung vorgesehen sein, welche bei Alterungseffekten, unzulässig hohen Netzspannungen und/oder energiearmen, periodischen, hochfrequenten Überspannungen sowohl die Überwachungsfunkenstrecke als auch das spannungsschaltende Element überbrückt. Diese Anordnung schützt vor Überlastung mit hohen Impulsströmen, bietet aber auch Gewähr gegen eine unzulässig starke Erwärmung der überspannungsbegrenzenden Elemente.

Bei dem Überspannungsableiter mit integrierter Schutzvorrichtung nach DE 10 2009 004 318 A1 ist mindestens ein Varistor und ein Kaltleiter vorhanden, welcher mit dem Varistor in thermischem Kontakt steht. Varistor und Kaltleiter sind elektrisch in Reihe geschalten. Weiterhin ist zwischen zwei Varistorscheiben eine keramische Scheibe mit Kaltleiterverhalten in Sandwichbauweise ausgebildet, wobei die genannten Elemente direkt miteinander mechanisch und elektrisch verbunden werden.

Eine solche Schutzvorrichtung dient insbesondere dem Schutz gegen lang andauernde, netzfrequente Überspannungen.

Grundsätzlich besteht das Bedürfnis, Überspannungsableiter mit eigensicherem Verhalten zu schaffen. Dies bedeutet, dass der entsprechende Überspannungsableiter über den vollen Bereich möglicher netzfrequenter prospektiver Kurzschlussströme, z.B. von 0 bis 25 kA, lückenlos und ohne zusätzliche externe Überstromschutzeinrichtungen, z.B. Sicherungen alle Überlastfälle, aber auch interne Fehlerzustände beherrscht.

Der eingangs geschildete Stand der Technik geht diesbezüglich von internen Sicherungen oder thermischen Abtrennvorrichtungen aus. Derartige Mittel weisen im Fehler- oder Überlastfall Mängel auf, d.h. der gesamte Bereich größerer Leckströme bis hin zu mittleren Kurzschlussströmen kann nicht sicher abgedeckt werden.

Alternative Schaltungskonzepte für eigensichere Überspannungsableiter, z.B. eine Kombination von Überspannungsableitern mit Überstromschutzeinrichtungen benötigen zusätzliche externe Komponenten, die zum Teil sehr kostenintensiv sind, zusätzlichen Platzbedarf in der Installation verursachen und eine sehr aufwendige Ausgestaltung nach sich ziehen. Darüber hinaus ergibt sich in vielen Fällen ein Zustand der Einschränkung der Leistungsfähigkeit bezogen auf das angestrebte Ableitvermögen.

Aus dem Vorgenannten ist es daher Aufgabe der Erfindung, eine weiterentwickelte Anordnung zum Überlastschutz von Überspannungsschutzgeräten, bestehend aus mindestens einem Typ II-Überspannungsableiter mit oder ohne thermischer, im Überlastungsfall ansprechender Abtrennvorrichtung anzugeben, welche eine lückenlose Abstimmung für alle denkbaren Überlast- und Fehlerfälle ermöglicht und gleichzeitig sicherstellt, dass der eingesetzte Überspannungsableiter im normalen, nicht von einer Schutzfunktion gezeichneten Betrieb möglichst keiner alterungsrelevanten Belastung unterliegt.

Die Lösung der Aufgabe der Erfindung erfolgt durch eine Anordnung zum Überlastschutz von Überspannungsschutzgeräten gemäß der Merkmalskombination nach Anspruch 1, wobei die Unteransprüche mindestens zweckmäßige Ausgestaltungen und Weiterbildungen darstellen.

Die erfindungsgemäße Anordnung zum Überlastschutz von Überspannungsschutzgeräten mit mindestens und insbesondere einem Typ II-Überspannungsableiter, z. B. ausgebildet als MOV, weist mit diesem baulich vereinigt eine von beweglichen Kontakten freie Schalteinheit auf.

Diese, von beweglichen Kontakten freie Schalteinheit ist mit dem mindestens einen Überspannungsableiter in Reihe geschalten.

Die Schalteinheit weist mindestens zwei, feststehende, in engem Abstand befindliche Schaltkontakte auf, wobei der Abstand der Schaltkontakte so vorgegeben ist, dass bei jedem Stoßstrom- oder Ableitvorgang durch den sich ausbildenden Lichtbogen die Schalteinheit in einen quasi geschlossenen Zustand übergeht.

Im Ruhezustand hingegen fällt die Spannung des anliegenden Netzes an der Schalteinheit ab, wodurch der in Reihe liegende Überspannungsableiter ohne Spannungsbelastung und damit leckstromfrei, d. h. ohne Belastungen bleibt und somit nicht altert.

Die baulich vereinigte Reihenschaltung zwischen Überspannungsableiter und der speziellen Schalteinheit bildet eine neue Baueinheit, die als solche als weitergebildeter Überlastschutz die gewünschte Abstimmung für alle Überlast- und Fehlerfälle ermöglicht. Gleichzeitig ist die Anordnung dadurch gekennzeichnet, dass mit dieser keine Verschlechterung der Schutzeigenschaften des eingesetzten Überspannungsableiters einhergeht. Man kann im Gegenteil diesbezüglich die Bemessungsspannung des eingesetzten Überspannungsableiters niedriger wählen, so dass sich ein verbessertes Schutzverhalten ergibt.

In Ausgestaltung der Erfindung sind die feststehenden Schaltkontakte so realisiert, dass der im Ableitfall entstehende Lichtbogen verharrt und eine Erhöhung der Lichtbogenbrennspannung unterbleibt.

Unter feststehenden Schaltkontakten soll eine technische Lösung verstanden werden, die zwar hersteller- oder anmelderseitig bezogen auf den Kontaktabstand vorgebbar oder variierbar ist, jedoch kein bewegliches, die betreffenden Kontakte überbrückendes Teil, bestehend aus einem elektrischen Leiter, umfasst.

Die Schalteinheit ist sowohl für Gleichspannungseinsatz als auch in Weiterbildung der Erfindung als ein bei Stromnulldurchgang eines Netzfolgestroms in den geöffneten Zustand übergehender Schalter ausgebildet.

Wird der eingesetzte Überspannungsableiter überlastet, ist die Schalteinheit bereits aktiv, so dass der auftretende netzfrequente Folgestrom unterbrochen wird und eine Zerstörung der Anordnung unterbleibt.

Da im Ruhezustand die Netzspannung über der Schalteinheit abfällt und damit der Überspannungsableiter, z.B. ausgebildet als Varistor, vom Netz getrennt ist, fließt im normalen Betrieb kein Leckstrom, was die Lebensdauer des eingesetzten Überspannungsableiters verlängert. In diesem Fall kann sogar eine thermisch aktivierte Abtrennvorrichtung entfallen.

Wie bereits erläutert, ist der Überspannungsableiter ein solcher vom Typ II, insbesondere ausgebildet als Varistor, hier wiederum insbesondere realisiert als Metalloxidvaristor (MOV).

Die Schalteinheit ist mit ihren feststehenden, beabstandeten Kontakten so realisiert, dass bei auftretenden Stoßströmen ein quasi Schaltvorgang mit Stromfluss über den Ableiter auslösbar ist, wobei der Ableiter dann die gewünschte Schutzfunktion erfüllt.

Erfolgt der Ableitvorgang bestimmungsgemäß, verbleibt die Schalteinheit frei von der Aufgabe des Netzfolgestromlöschens.

Der Leistungsumsatz in der Schalteinheit beim Stoßstromvorgang ist durch Beschränkung der Lichtbogenspannung zwischen den Schaltkontakten begrenzbar. Dies bedeutet, dass nur ein sehr geringer und vernachlässigbarer Abbrand bzw. Verschleiß an den feststehenden Schaltkontakten gegeben ist.

Gemäß der Erfindung ist die Schalteinheit als eine miniaturisierte, offene Funkenstrecke bzw. nach dem Prinzip einer solchen Funkenstrecke ausgebildet.

Erfindungsgemäß ist darüber hinaus eine Baueinheit zum Überlastschutz mit Reihenschaltung aus Schalteinheit und Überspannungsableiter, wobei selbige in einem Gehäuse angeordnet ist, wobei am Gehäuse zwei Außenanschlüsse der Reihenschaltung vorgesehen sind. Diese Baueinheit kann als eigentlicher Überspannungsableiter, geeignet für alle denkbaren Überlast- und Fehlerfälle, zum Einsatz kommen. Das vorerwähnte externe Überstromschutzorgan und/oder eine thermische Abtrennvorrichtung zum Schutz des Überspannungsableiters kann entfallen.

Die Erfindung soll nachstehend anhand eines Ausführungsbeispiels sowie unter Zuhilfenahme von Figuren näher erläutert werden.

Hierbei zeigen:
- Fig. 1: eine prinzipielle Darstellung der Baueinheit zum Überlastschutz, umfassend eine Reihenschaltung aus Schalteinheit sowie Überspannungsableiter mit thermischer Abtrennvorrichtung und
- Fig.2: eine Darstellung ähnlich derjenigen nach Fig. 1, jedoch mit einem Überspannungsableiter vom Typ II ohne zusätzliche thermische, im Überlastungsfall ansprechende Abtrennvorrichtung.

Bei den Figuren wird zunächst von einer Baueinheit 1 ausgegangen.

Diese Baueinheit 1, die durch ein gemeinsames Gehäuse gekennzeichnet ist, weist in ihrem Inneren einen Typ II-Überspannungsableiter 2 auf.

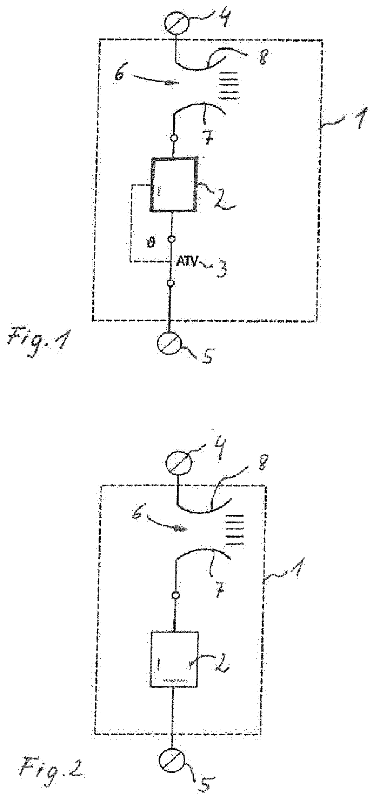

Dieser Typ II-Überspannungsableiter 2 besitzt im Fall der Ausführungsform nach Fig. 1 eine an sich bekannte, im Überlastungsfall ansprechende thermische Abtrennvorrichtung 3.

Die Baueinheit 1 weist darüber hinaus Außenanschlüsse 4 und 5 auf.

Dem Typ II-Überspannungsableiter 2 ist intern eine Schalteinheit 6 in Reihe geschalten.

Die Schalteinheit weist zwei feststehende, nicht bewegliche Kontakt 7; 8 auf.

Die Kontakte 7; 8 befinden sich in einem engen Abstand und können Bestandteil von Anschlüssen des Überspannungsableiters 2 sein.

Der Abstand ist so gewählt, dass bei jedem Stoßstrom- oder Ableitvorgang durch den sich ausbildenden Lichtbogen die Schalteinrichtung 6 in einen quasi geschlossenen Zustand übergeht.

Im Ruhezustand hingegen fällt die Spannung des an den Anschlüssen 4 und 5 anliegenden Netzes an der Schalteinheit 6 ab, wodurch der in Reihe liegende Überspannungsableiter 2 leckstromfrei und damit belastungsfrei bleibt.

Die Schalteinheit 6 kann funktionsseitig mit einer miniaturisierten Funkenstrecke verglichen werden, die als zusätzliche Komponente in die Baueinheit 1 bzw. in den Überspannungsableiter 2 integriert ist.

Die Ansprechcharakteristik der Schalteinheit 6 ist so ausgewählt, dass diese bei jedem Ableitvorgang ebenfalls aktiviert wird und somit für Überlast- bzw. Fehlerfälle stromseitig geschlossen ist; im Normalfall hingegen passiv bleibt.

Die Schalteinheit 6 ist so ausgeführt, dass Stoßstrombelastungen zu keiner unzulässigen Alterung oder dergleichen Effekten führen.

Dies ist dadurch erreichbar, dass beim Stoßstromvorgang der entstehende Lichtbogen an einer Zündkontakt-Stelle verharrt.

Gemäß Ausführungsbeispiel ist der Abstand der Schaltkontakte 7 und 8 sehr klein gewählt. Damit wird eine Erhöhung der Lichtbogenbrennspannung vermieden. Auch im Fall einer Stoßstrombelastung entstehen nur Bogenspannungen im Bereich von 20 V bis 30 V. Mit einer solchen geringen Bogenspannung ist nur ein sehr kleiner Leistungsumsatz im entstehenden Lichtbogen verbunden, was den Abbrand bzw. den Verschleiß an den Schaltkontakten reduziert.

Die Darstellung nach Fig. 2 ergibt sich als Ausführungsvariante durch die Tatsache, dass aufgrund des Trennens des Überspannungsableiters 2 vom Netz durch die offene Schalteinheit im Normalbetrieb kein Leckstrom durch den Ableiter 2 fließt. Damit kann eine thermisch aktivierte Abtrennvorrichtung entfallen. Dadurch, dass die Schalteinheit bei jedem Ableitvorgang aktiv ist, können ohne zeitliche Verzögerungen auftretende netzfrequente Folgeströme begrenzt und unterbrochen werden. In diesem Fall wird der bei Stoßstrom entstandene Lichtbogen schnell aus dem Bereich zwischen den Schaltkontakten weg bewegt und hierdurch verlängert und gekühlt, so dass die Bogenspannung des Lichtbogens ansteigt und hierdurch die gewünschte Fehlerstrombegrenzung eintritt.

Da im Gegensatz zu mechanischen Schaltgeräten bei der Schalteinheit auf der Basis einer Funkenstrecke als Backupschutzorgan nicht erst eine Kontakttrennung erfolgen muss, ergeben sich keine typischen Stoßstromprobleme wie bei kontaktbehafteten Schalteinrichtungen. Die Schalteinheit kann durch einen dritten Kontakt, der sich im Abstand zwischen den Kontakten 7 und 8 befindet, quasi getriggert werden. Hierdurch ist beispielsweise eine Überlastanzeige realisierbar.

## Patentansprüche

1. Anordnung zum Überlastschutz von Überspannungsschutzgeräten, bestehend aus mindestens einem Überspannungsableiter (2), insbesondere vom Typ II mit oder ohne thermischer, im Überlastungsfall ansprechender Abtrenneinrichtung (3),
wobei
dem mindestens einen Überspannungsableiter (2), baulich mit diesem vereinigt, eine von beweglichen Kontakten freie Schalteinheit (6) in Reihe geschalten ist, welche mindestens zwei feststehende, in engem Abstand befindliche Schaltkontakte (7; 8) aufweist, wobei der Abstand der jeweiligen Schaltkontakte (7; 8) so vorgegeben ist, dass bei jedem Stoßstrom- oder Ableitvorgang durch den sich ausbildenden Lichtbogen die Schalteinheit (6) in einen quasi geschlossenen Zustand übergeht; im Ruhezustand hingegen die Spannung des anliegenden Netzes an der Schalteinheit (6) abfällt, wodurch der in Reihe liegende Überspannungsableiter (3) leckstromfrei bleibt,
**dadurch gekennzeichnet, dass**
die Schalteinheit (6) als eine miniaturisierte, offene Funkenstrecke ausgebildet ist.

2. Anordnung nach Anspruch1,
**dadurch gekennzeichnet, dass**
die feststehenden Schaltkontakte (7; 8) so ausgebildet sind, dass der im Ableitfall entstehende Lichtbogen verharrt und eine Erhöhung der Lichtbogenbrennspannung unterbleibt.

3. Anordnung nach Anspruch 1 oder 2,
**dadurch gekennzeichnet, dass**
die Schalteinheit (6) als ein bei Stromnulldurchgang eines Netzfolgestroms in den geöffneten Zustand übergehender Schalter ausgebildet ist.

4. Anordnung nach einem der vorangegangenen Ansprüche,
**dadurch gekennzeichnet, dass**
der Überspannungsableiter als Varistor, insbesondere als Metalloxidvaristor (MOV) ausgeführt ist.

5. Anordnung nach einem der vorangegangenen Ansprüche
**dadurch gekennzeichnet, dass**
die Schalteinheit (6) mit ihren feststehenden, beabstandeten Kontakten (7; 8) so realisiert ist, dass bei auftretenden Stoßströmen ein quasi Schaltvorgang mit Stromfluss über den Ableiter (2) auslösbar ist.

6. Anordnung nach einem der vorangegangenen Ansprüche,
**dadurch gekennzeichnet, dass**
der Leistungsumsatz in der Schalteinheit (6) je Stoßstromvorgang durch Beschränkung der Lichtbogenspannung zwischen den Schaltkontakten (7; 8) begrenzbar ist.

7. Anordnung nach einem der vorangegangenen Ansprüche,
**dadurch gekennzeichnet, dass**
bei erstmaliger Überlastung und Auslösung der Schalteinheit (6) eine Überlastungsanzeige aktiviert wird, um den Überspannungsableiter zu deaktivieren oder auszutauschen.

8. Anordnung nach einem der Ansprüche 1 bis 6,
**dadurch gekennzeichnet, dass**
bei erstmaliger Überlastung und Aktivierung der Schalteinheit (6) der Überspannungsableiter inaktiviert oder zerstört wird.

9. Baueinheit (1) zum Überlastschutz nach einem der vorangegangenen Ansprüche,
wobei selbige in einem Gehäuse, enthaltend die Reihenschaltung, angeordnet ist, wobei am Gehäuse zwei Außenanschlüsse (4; 5) der Reihenschaltung vorgesehen sind.

## Claims

1. Arrangement for overload protection of overvoltage protection devices, consisting of at least one overvoltage arrester (2), in particular of the type II with or without a thermal disconnecting device (3) that responds in the event of an overload,
wherein
a switching unit (6) that is free from movable contacts, and is structurally combined with and connected in series to the least one overvoltage arrester (2) and has at least two fixed switching contacts (7; 8) that are located at a close spacing, wherein the spacing of the respective switching contacts (7; 8) is predetermined in such a way that in the case of any surge current procedure or discharging procedure by virtue of the forming electric arc the switching unit (6) transfers into a quasi-closed state; conversely in the resting state the voltage of the connected network falls at the switching unit (6), whereby the overvoltage arrester (3) that is in series remains free from leakage current,
**characterised in that**
the switching unit (6) is configured as a miniaturised open spark gap.

2. Arrangement according to claim 1,
**characterised in that**
the fixed switching contacts (7; 8) are configured in such a way that the electric arc that occurs in the event of discharge remains and an increase of the electric arc burning voltage is omitted.

3. Arrangement according to claim 1 or 2,
**characterised in that**
the switching unit (6) is configured as a switch that changes into the opened state in the event of a secondary current passing through zero.

4. Arrangement according to one of the preceding claims, **characterised in that**
the overvoltage arrestor is configured as a varistor, in particular as a metal oxide varistor (MOV).

5. Arrangement according to one of the preceding claims, **characterised in that**
the switching unit (6) is realised with its fixed, spaced contacts (7; 8) in such a way that a quasi-switching procedure can be triggered with current flow via the arrester (2) in the event of current surges occurring.

6. Arrangement according to one of the preceding claims, **characterised in that**
the power conversion in the switching unit (6) can be limited depending on the surge current procedure by means of limiting the electric arc voltage between the switching contacts (7; 8).

7. Arrangement according to one of the preceding claims, **characterised in that**
an overvoltage display is activated in the event of the first overload and triggering of the switching unit (6) in order to deactivate or exchange the overvoltage arrester.

8. Arrangement according to one of claims 1 to 6,
**characterised in that**
the surge arrester is inactivated or destroyed in the event of the first overload and activation of the switching unit (6) .

9. Unit (1) for overload protection according to one of the preceding claims,
wherein the unit is arranged in a housing containing the series connection, wherein two outer connectors (4; 5) of the series connection are provided on the housing.

## Revendications

1. Dispositif de protection contre les surcharges des appareils de protection contre les surtensions,
composé d'au moins un parasurtenseur (2), en particulier de type II avec ou sans moyen de sectionnement thermique (3), réagissant en cas de surcharge,
dans lequel
une unité de commutation (6) exempte de contacts mobiles est montée en série avec ledit au moins un parasurtenseur (2) et assemblée structurellement à celui-ci, laquelle présente au moins deux contacts de commutation (7 ; 8) fixes et faiblement espacés, l'espace entre les contacts de commutation respectifs (7 ; 8) étant prédéfini de telle sorte qu'à chaque processus de courant de choc ou de dérivation par l'arc électrique qui se forme, l'unité de commutation (6) passe dans un état quasi fermé ; à l'état de repos, en revanche, la tension du réseau présent diminue au niveau de l'unité de commutation (6), de sorte que le parasurtenseur (3) monté en série reste exempt de courant de fuite,
**caractérisé en ce que**
l'unité de commutation (6) est réalisée sous la forme d'un éclateur ouvert miniaturisé.

2. Dispositif selon la revendication 1,
**caractérisé en ce que**
les contacts de commutation fixes (7 ; 8) sont réalisés de telle sorte que l'arc électrique généré en cas de dérivation persiste et qu'une augmentation de la tension d'entretien d'arc électrique soit évitée.

3. Dispositif selon la revendication 1 ou 2,
**caractérisé en ce que**
l'unité de commutation (6) est réalisée sous la forme d'un interrupteur qui passe à l'état ouvert au passage par zéro d'un courant de suite du réseau.

4. Dispositif selon l'une des revendications précédentes, **caractérisé en ce que**
le parasurtenseur est réalisé sous la forme d'une varistance, en particulier d'une varistance à oxyde métallique (MOV).

5. Dispositif selon l'une des revendications précédentes, **caractérisé en ce que**
l'unité de commutation (6) est réalisée avec ses contacts (7 ; 8) fixes et espacés de telle sorte qu'un processus de quasi-commutation avec passage de courant par le parasurtenseur (2) peut être déclenché en cas d'apparition de courants de choc.

6. Dispositif selon l'une des revendications précédentes, **caractérisé en ce que**
la conversion de puissance dans l'unité de commutation (6) par processus de courant de choc peut être limitée en limitant la tension d'arc entre les contacts de commutation (7 ; 8).

7. Dispositif selon l'une des revendications précédentes, **caractérisé en ce que**
lors de la première surcharge et du déclenchement de l'unité de commutation (6), une indication de surcharge est activée afin de désactiver ou remplacer le parasurtenseur.

8. Dispositif selon l'une des revendications 1 à 6,
**caractérisé en ce que**
lors de la première surcharge et activation de l'unité de commutation (6), le parasurtenseur est inactivé ou détruit.

9. Unité physique (1) de protection contre les surcharges selon l'une des revendications précédentes,
laquelle est disposée dans un boîtier contenant le montage en série, deux raccordements extérieurs (4 ; 5) du montage en série étant prévus sur le boîtier.
